# EUROPEAN PATENT APPLICATION

(11) **EP 4 797 482 A1**
(43) Date of publication of application: **26.08.2026**
(21) Application number: 24906204.3
(22) Date of filing: 11.12.2024
(51) Int. Cl.: H02J 3/38, H02J 3/32

(54) **PHOTOVOLTAIC ENERGY STORAGE SYSTEM**

(30) Priority: 20.12.2023 CN 202311766580
(71) Applicant: Huawei Digital Power Technologies Co., Ltd., Shenzhen, Guangdong 518043 (CN)
(72) Inventor: SONG, Zhengang, Shenzhen, Guangdong 518043 (CN); XIA, Ting, Shenzhen, Guangdong 518043 (CN); LI, Luo, Shenzhen, Guangdong 518043 (CN)
(74) Representative: Isarpatent
(86) International application number: PCT/CN2024/138483
(87) International publication number: WO 2025/130721

(57) **Abstract**

This application provides a photovoltaic energy storage system, including an inverter, an energy storage apparatus, and a voltage compensation component. The inverter includes a direct current conversion circuit, a direct current busbar, an inverter circuit, and a first switch. A positive input of the direct current conversion circuit is configured to connect to a positive electrode of a photovoltaic module, and a negative input of the direct current conversion circuit is configured to connect to a negative electrode of the photovoltaic module. The first switch is disposed between a connection point between the voltage compensation component and the negative input of the direct current conversion circuit and a negative electrode of the direct current busbar, and is configured to control connection/disconnection between the voltage compensation component and the negative electrode of the direct current busbar. The photovoltaic energy storage system further includes a controller. The controller is configured to: when an output voltage and/or an output current of the photovoltaic module are/is less than or equal to a threshold, control the first switch to be turned off, and control the voltage compensation component to operate, so that a voltage of the negative electrode of the photovoltaic module relative to a ground is raised to a zero voltage or a positive voltage. In this solution, PID compensation can be performed on the photovoltaic module at night, to resolve a PID problem of the photovoltaic module.

## Description

This application claims priority to Chinese Patent Application 202311766580.0, filed with the China National Intellectual Property Administration on December 20, 2023 and entitled "PHOTOVOLTAIC ENERGY STORAGE SYSTEM", which is incorporated herein by reference in its entirety.

### TECHNICAL FIELD

This application relates to the field of power electronics technologies, and more specifically, to a photovoltaic energy storage system and a control method applied to the photovoltaic energy storage system.

### BACKGROUND

As countries around the world continuously advance energy conservation, emission reduction, and energy transformation, renewable energy power generation technologies have attracted increasing attention. Photovoltaic power generation systems are widely applied to power systems and microgrids due to their technology maturity and economy.

However, the photovoltaic power generation system has constantly been troubled by power generation efficiency of the photovoltaic power generation system. After a photovoltaic module is used for a period of time, a problem of power generation performance degradation occurs, and consequently, an output power of the entire photovoltaic power generation system decreases. A study finds that a reason for the phenomenon is that a high voltage between a circuit in a crystalline silicon photovoltaic module and a ground metal frame of the crystalline silicon photovoltaic module causes continuous degradation of power generation performance of the photovoltaic module. This phenomenon is referred to as potential induced degradation (potential induced degradation, PID).

Usually, a solar inverter is grid-connected in the daytime to generate power, and at night, a voltage compensation module may be used to raise a voltage of a negative electrode (PV-) of a photovoltaic module relative to a ground (PE), to perform PID compensation for the photovoltaic module.

However, for a photovoltaic energy storage system, when a photovoltaic module has no energy output at night, an energy storage apparatus still provides energy for an optical storage inverter, and the optical storage inverter continuously runs in a grid-connected manner. In this case, a negative electrode (PV-) of the photovoltaic module maintains a continuous negative voltage relative to the ground (PE). Therefore, PID compensation cannot be performed on the photovoltaic module by using a voltage compensation module. At the same time, photovoltaic modules have no voltage output at night. As a result, negative electrodes (PV-) of all the photovoltaic modules in all photovoltaic strings hold the same negative voltage relative to the ground (PE), causing a more severe PID problem than in the daytime.

Based on this, this application is intended to provide a photovoltaic energy storage system, to perform PID compensation for the photovoltaic module at night, to resolve a PID problem of the photovoltaic module in the photovoltaic energy storage system.

### SUMMARY

This application provides a photovoltaic energy storage system, to perform PID compensation for a photovoltaic module at night, to resolve a PID problem of the photovoltaic module.

According to a first aspect, a photovoltaic energy storage system is provided, including: an inverter, an energy storage apparatus, and a voltage compensation component. The inverter includes a direct current conversion circuit, a direct current busbar, an inverter circuit, and a first switch. A positive input of the direct current conversion circuit is configured to connect to a positive electrode of a photovoltaic module, and a negative input of the direct current conversion circuit is configured to connect to a negative electrode of the photovoltaic module. A positive output of the direct current conversion circuit is connected to a positive electrode of the direct current busbar, and a negative output of the direct current conversion circuit is connected to a negative electrode of the direct current busbar. The positive electrode of the direct current busbar is connected to a positive input of the inverter circuit and a positive electrode of the energy storage apparatus. The negative electrode of the direct current busbar is connected to a negative input of the inverter circuit and a negative electrode of the energy storage apparatus. A positive electrode of the voltage compensation component is configured to connect to the negative electrode of the photovoltaic module, and a negative electrode of the voltage compensation component is connected to a ground. The first switch is disposed between a connection point between the voltage compensation component and the negative input of the direct current conversion circuit and the negative electrode of the direct current busbar, and is configured to control connection/disconnection between the voltage compensation component and the negative electrode of the direct current busbar. The photovoltaic energy storage system further includes a controller. The controller is configured to: when an output voltage and/or an output current of the photovoltaic module are/is less than or equal to a threshold, control the first switch to be turned off, and control the voltage compensation component to operate, so that a voltage of the negative electrode of the photovoltaic module relative to the ground is raised to a zero voltage or a positive voltage.

According to the foregoing technical solution, when the output voltage and/or the output current of the photovoltaic module are/is less than or equal to the threshold, the controller controls the first switch to be turned off, so that the negative electrode of the photovoltaic module is disconnected from the negative electrode of the direct current busbar. In addition, the controller controls the voltage compensation component to operate, so that the voltage of the negative electrode (PV-) of the photovoltaic module relative to the ground (PE) is raised to the zero voltage to the positive voltage, to implement PID compensation for the photovoltaic module at night. Further, in this embodiment of this application, no isolated transformer is needed, thereby greatly reducing costs, reducing a quantity and a size of devices, and further improving power generation efficiency of the photovoltaic energy storage system.

With reference to the first aspect, in some implementations of the first aspect, the voltage compensation component includes a voltage compensation module and a second switch. The voltage compensation module is connected to the second switch in series, and the voltage compensation module outputs a positive voltage. The controller is specifically configured to control the second switch to be closed, so that the voltage compensation component operates. According to the foregoing technical solution, PID compensation can be performed on the photovoltaic module at night, to resolve a PID problem of the photovoltaic module in the photovoltaic energy storage system.

With reference to the first aspect, in some implementations of the first aspect, the controller is further configured to: when a voltage of the direct current busbar is less than or equal to a first preset value, control a PWM modulation mode of a switching transistor of the direct current conversion circuit to be an open-loop PWM modulation mode. When the switching transistor is in the open-loop PWM modulation mode, a voltage at two ends of the first switch decreases.

According to the foregoing technical solution, when the energy storage apparatus in the photovoltaic energy storage system is shut down at a lower limit (for example, a battery SoC in the energy storage apparatus reaches lower-limit shutdown, the energy storage apparatus is faulty, a battery level reaches a lower limit, or an energy storage switch is manually turned off), the first switch can be safely closed before the photovoltaic energy storage system is shut down at a lower limit. In this way, contact damage, increased contact impedance, and damage of the first switch are avoided, and reliability of the entire photovoltaic energy storage system is improved.

With reference to the first aspect, in some implementations of the first aspect, the controller is further configured to: when a voltage value at the two ends of the first switch is less than or equal to a second preset value, control the first switch to be closed, where the second preset value is a safe turn-off voltage value at the two ends of the first switch.

According to the foregoing technical solution, when the energy storage apparatus in the photovoltaic energy storage system is shut down at the lower limit (for example, the battery SoC in the energy storage apparatus reaches lower-limit shutdown, the energy storage apparatus is faulty, the battery level reaches the lower limit, or the energy storage switch is manually turned off), the first switch can be safely closed before the photovoltaic energy storage system is shut down at the lower limit. In this way, contact damage, increased contact impedance, and damage of the first switch are avoided, and reliability of the entire photovoltaic energy storage system is improved.

With reference to the first aspect, in some implementations of the first aspect, the controller is further configured to: when duration for which the switching transistor is in the open-loop PWM modulation mode is greater than or equal to preset duration, control the first switch to be closed.

According to the foregoing technical solution, when the energy storage apparatus in the photovoltaic energy storage system is shut down at the lower limit (for example, the battery SoC in the energy storage apparatus reaches lower-limit shutdown, the energy storage apparatus is faulty, the battery level reaches the lower limit, or the energy storage switch is manually turned off), the first switch can be safely closed before the photovoltaic energy storage system is shut down at the lower limit. In this way, contact damage, increased contact impedance, and damage of the first switch are avoided, and reliability of the entire photovoltaic energy storage system is improved.

With reference to the first aspect, in some implementations of the first aspect, the controller is further configured to: when the output voltage and/or the output current of the photovoltaic module are/is greater than the threshold, control the first switch to be closed, and control the voltage compensation component to stop operating. According to the foregoing technical solution, PID compensation can be performed on the photovoltaic module at night, to resolve the PID problem of the photovoltaic module in the photovoltaic energy storage system.

With reference to the first aspect, in some implementations of the first aspect, when the switching transistor is in the open-loop PWM modulation mode, the voltage at the two ends of the first switch decreases as the duration for which the switching transistor is in the open-loop PWM modulation mode increases. A relationship between the voltage and the duration satisfies a linear function.

According to the foregoing technical solution, when the energy storage apparatus in the photovoltaic energy storage system is shut down at the lower limit (for example, the battery SoC in the energy storage apparatus reaches lower-limit shutdown, the energy storage apparatus is faulty, the battery level reaches the lower limit, or the energy storage switch is manually turned off), the first switch can be safely closed before the photovoltaic energy storage system is shut down at the lower limit. In this way, contact damage, increased contact impedance, and damage of the first switch are avoided, and reliability of the entire photovoltaic energy storage system is improved.

With reference to the first aspect, in some implementations of the first aspect, the photovoltaic energy storage system further includes a first diode. The first diode is connected in parallel across the two ends of the first switch. A direction of a forward current of the first diode is opposite to a direction of a current flowing through the first switch in a closed state. According to the foregoing technical solution, the first diode is disposed in reverse parallel across the two ends of the first switch, so that impact of overvoltage in the circuit can be eliminated.

With reference to the first aspect, in some implementations of the first aspect, the first switch includes any one of the following: a relay, a metal-oxide semiconductor field-effect transistor MOSFIT, and an insulated gate bipolar transistor IGBT.

With reference to the first aspect, in some implementations of the first aspect, the switching transistor includes any one of the following: a metal-oxide semiconductor field-effect transistor MOSFIT and an insulated gate bipolar transistor IGBT.

According to a second aspect, an inverter is provided, including: a direct current conversion circuit, a direct current busbar, an inverter circuit, and a first switch. A positive input of the direct current conversion circuit is configured to connect to a positive electrode of a photovoltaic module, and a negative input of the direct current conversion circuit is configured to connect to a negative electrode of the photovoltaic module. A positive output of the direct current conversion circuit is connected to a positive electrode of the direct current busbar, and a negative output of the direct current conversion circuit is connected to a negative electrode of the direct current busbar. The positive electrode of the direct current busbar is connected to a positive input of the inverter circuit, and the negative electrode of the direct current busbar is connected to a negative input of the inverter circuit. The positive electrode of the direct current busbar is configured to connect to a positive electrode of an energy storage apparatus, and the negative electrode of the direct current busbar is configured to connect to a negative electrode of the energy storage apparatus. The negative input of the direct current conversion circuit is configured to connect to a positive electrode of a voltage compensation component. A negative electrode of the voltage compensation component is connected to a ground. The first switch is disposed between the negative input of the direct current conversion circuit and the negative electrode of the direct current busbar, and is configured to control connection/disconnection between the negative input of the direct current conversion circuit and the negative electrode of the direct current busbar. The inverter further includes a controller. The controller is configured to: when an output voltage and/or an output current of the photovoltaic module are/is less than or equal to a threshold, control the first switch to be turned off, and control the voltage compensation component to operate, so that a voltage of the negative electrode of the photovoltaic module relative to the ground is raised to a zero voltage or a positive voltage.

According to the foregoing technical solution, when the output voltage and/or the output current of the photovoltaic module are/is less than or equal to the threshold, the controller controls the first switch to be turned off, so that the negative electrode of the photovoltaic module is disconnected from the negative electrode of the direct current busbar. In addition, the controller controls the voltage compensation component to operate, so that the voltage of the negative electrode (PV-) of the photovoltaic module relative to the ground (PE) is raised to the zero voltage to the positive voltage, to implement PID compensation for the photovoltaic module at night. Further, in this embodiment of this application, no isolated transformer is needed, thereby greatly reducing costs, reducing a quantity and a size of devices, and further improving power generation efficiency of the photovoltaic energy storage system.

With reference to the second aspect, in some implementations of the second aspect, the voltage compensation component includes a voltage compensation module and a second switch. The voltage compensation module is connected to the second switch in series, and the voltage compensation module outputs a positive voltage. The controller is specifically configured to control the second switch to be closed, so that the voltage compensation component operates. According to the foregoing technical solution, PID compensation can be performed on the photovoltaic module at night, to resolve a PID problem of the photovoltaic module in the photovoltaic energy storage system.

With reference to the second aspect, in some implementations of the second aspect, the controller is further configured to: when a voltage of the direct current busbar is less than or equal to a first preset value, control a PWM modulation mode of a switching transistor of the direct current conversion circuit to be an open-loop PWM modulation mode. When the switching transistor is in the open-loop PWM modulation mode, a voltage at two ends of the first switch decreases.

According to the foregoing technical solution, when the energy storage apparatus in the photovoltaic energy storage system is shut down at a lower limit (for example, a battery SoC in the energy storage apparatus reaches lower-limit shutdown, the energy storage apparatus is faulty, a battery level reaches a lower limit, or an energy storage switch is manually turned off), the first switch can be safely closed before the photovoltaic energy storage system is shut down at a lower limit. In this way, contact damage, increased contact impedance, and damage of the first switch are avoided, and reliability of the entire photovoltaic energy storage system is improved.

With reference to the second aspect, in some implementations of the second aspect, the controller is further configured to: when a voltage value at the two ends of the first switch is less than or equal to a second preset value, control the first switch to be closed, where the second preset value is a safe turn-off voltage value at the two ends of the first switch.

According to the foregoing technical solution, when the energy storage apparatus in the photovoltaic energy storage system is shut down at the lower limit (for example, the battery SoC in the energy storage apparatus reaches lower-limit shutdown, the energy storage apparatus is faulty, the battery level reaches the lower limit, or the energy storage switch is manually turned off), the first switch can be safely closed before the photovoltaic energy storage system is shut down at the lower limit. In this way, contact damage, increased contact impedance, and damage of the first switch are avoided, and reliability of the entire photovoltaic energy storage system is improved.

With reference to the second aspect, in some implementations of the second aspect, the controller is further configured to: when duration for which the switching transistor is in the open-loop PWM modulation mode is greater than or equal to preset duration, control the first switch to be closed.

According to the foregoing technical solution, when the energy storage apparatus in the photovoltaic energy storage system is shut down at the lower limit (for example, the battery SoC in the energy storage apparatus reaches lower-limit shutdown, the energy storage apparatus is faulty, the battery level reaches the lower limit, or an energy storage switch is manually turned off), the first switch can be safely closed before the photovoltaic energy storage system is shut down at the lower limit. In this way, contact damage, increased contact impedance, and damage of the first switch are avoided, and reliability of the entire photovoltaic energy storage system is improved.

With reference to the second aspect, in some implementations of the second aspect, the controller is further configured to: when the output voltage and/or the output current of the photovoltaic module are/is greater than the threshold, control the first switch to be closed, and control the voltage compensation component to stop operating. According to the foregoing technical solution, PID compensation can be performed on the photovoltaic module at night, to resolve the PID problem of the photovoltaic module in the photovoltaic energy storage system.

With reference to the second aspect, in some implementations of the second aspect, when the switching transistor is in the open-loop PWM modulation mode, the voltage at the two ends of the first switch decreases as the duration for which the switching transistor is in the open-loop PWM modulation mode increases. A relationship between the voltage and the duration satisfies a linear function.

According to the foregoing technical solution, when the energy storage apparatus in the photovoltaic energy storage system is shut down at the lower limit (for example, the battery SoC in the energy storage apparatus reaches lower-limit shutdown, the energy storage apparatus is faulty, the battery level reaches the lower limit, or the energy storage switch is manually turned off), the first switch can be safely closed before the photovoltaic energy storage system is shut down at the lower limit. In this way, contact damage, increased contact impedance, and damage of the first switch are avoided, and reliability of the entire photovoltaic energy storage system is improved.

With reference to the second aspect, in some implementations of the second aspect, the inverter further includes a first diode. The first diode is connected in parallel across the two ends of the first switch. A direction of a forward current of the first diode is opposite to a direction of a current flowing through the first switch in a closed state. According to the foregoing technical solution, the first diode is disposed in reverse parallel across the two ends of the first switch, so that impact of overvoltage in the circuit can be eliminated.

With reference to the second aspect, in some implementations of the second aspect, the first switch includes any one of the following: a relay, a metal-oxide semiconductor field-effect transistor MOSFIT, and an insulated gate bipolar transistor IGBT.

With reference to the second aspect, in some implementations of the second aspect, the switching transistor includes any one of the following: a metal-oxide semiconductor field-effect transistor MOSFIT and an insulated gate bipolar transistor IGBT.

According to a third aspect, a control method is provided. The method includes: obtaining an output voltage and/or an output current of a photovoltaic module; and when the output voltage and/or the output current of the photovoltaic module are/is less than or equal to a threshold, controlling a first switch to be turned off, and controlling a voltage compensation component to operate, so that a voltage of a negative electrode of the photovoltaic module relative to the ground is raised to a zero voltage or a positive voltage, where a positive electrode of the voltage compensation component is configured to connect to the negative electrode of the photovoltaic module, and a negative electrode of the voltage compensation component is connected to the ground. The first switch is disposed between a connection point between the voltage compensation component and a negative input of the direct current conversion circuit and a negative electrode of a direct current busbar, and is configured to control connection/disconnection between the voltage compensation component and the negative electrode of the direct current busbar. The negative electrode of the direct current busbar is connected to a negative electrode of the energy storage apparatus, and a positive electrode of the direct current busbar is connected to a positive electrode of the energy storage apparatus.

According to the foregoing technical solution, when the output voltage and/or the output current of the photovoltaic module are/is less than or equal to the threshold, the controller controls the first switch to be turned off, so that the negative electrode of the photovoltaic module is disconnected from the negative electrode of the direct current busbar. In addition, the controller controls the voltage compensation component to operate, so that the voltage of the negative electrode (PV-) of the photovoltaic module relative to the ground (PE) is raised to the zero voltage to the positive voltage, to implement PID compensation for the photovoltaic module at night. Further, in this embodiment of this application, no isolated transformer is needed, thereby greatly reducing costs, reducing a quantity and a size of devices, and further improving power generation efficiency of the photovoltaic energy storage system.

With reference to the third aspect, in some implementations of the third aspect, the method further includes: obtaining a voltage of the direct current busbar; and when the voltage of the direct current busbar is less than or equal to a first preset value, controlling a PWM modulation mode of a switching transistor of the direct current conversion circuit to be an open-loop PWM modulation mode. When the switching transistor is in the open-loop PWM modulation mode, a voltage at two ends of the first switch decreases.

According to the foregoing technical solution, when the energy storage apparatus in the photovoltaic energy storage system is shut down at a lower limit (for example, a battery SoC in the energy storage apparatus reaches lower-limit shutdown, the energy storage apparatus is faulty, a battery level reaches a lower limit, or an energy storage switch is manually turned off), the first switch can be safely closed before the photovoltaic energy storage system is shut down at a lower limit. In this way, contact damage, increased contact impedance, and damage of the first switch are avoided, and reliability of the entire photovoltaic energy storage system is improved.

With reference to the third aspect, in some implementations of the third aspect, the method further includes: obtaining a voltage value at the two ends of the first switch; and when the voltage value at the two ends of the first switch is less than or equal to a second preset value, controlling the first switch to be closed, where the second preset value is a safe turn-off voltage value at the two ends of the first switch.

According to the foregoing technical solution, when the energy storage apparatus in the photovoltaic energy storage system is shut down at the lower limit (for example, the battery SoC in the energy storage apparatus reaches lower-limit shutdown, the energy storage apparatus is faulty, the battery level reaches the lower limit, or the energy storage switch is manually turned off), the first switch can be safely closed before the photovoltaic energy storage system is shut down at the lower limit. In this way, contact damage, increased contact impedance, and damage of the first switch are avoided, and reliability of the entire photovoltaic energy storage system is improved.

With reference to the third aspect, in some implementations of the third aspect, the method further includes: when duration for which the switching transistor is in the open-loop PWM modulation mode is greater than or equal to preset duration, controlling the first switch to be closed.

According to the foregoing technical solution, when the energy storage apparatus in the photovoltaic energy storage system is shut down at the lower limit (for example, the battery SoC in the energy storage apparatus reaches lower-limit shutdown, the energy storage apparatus is faulty, the battery level reaches the lower limit, or the energy storage switch is manually turned off), the first switch can be safely closed before the photovoltaic energy storage system is shut down at the lower limit. In this way, contact damage, increased contact impedance, and damage of the first switch are avoided, and reliability of the entire photovoltaic energy storage system is improved.

With reference to the third aspect, in some implementations of the third aspect, the method further includes: when the output voltage and/or the output current of the photovoltaic module are/is greater than the threshold, controlling the first switch to be closed, and controlling the voltage compensation component to stop operating. According to the foregoing technical solution, PID compensation can be performed on the photovoltaic module at night, to resolve a PID problem of the photovoltaic module in the photovoltaic energy storage system.

With reference to the third aspect, in some implementations of the third aspect, that the voltage at the two ends of the first switch decreases includes: the voltage at the two ends of the first switch decreases as the duration for which the switching transistor is in the open-loop PWM modulation mode increases. A relationship between the voltage and the duration satisfies a linear function.

According to the foregoing technical solution, when the energy storage apparatus in the photovoltaic energy storage system is shut down at the lower limit (for example, the battery SoC in the energy storage apparatus reaches lower-limit shutdown, the energy storage apparatus is faulty, the battery level reaches the lower limit, or the energy storage switch is manually turned off), the first switch can be safely closed before the photovoltaic energy storage system is shut down at the lower limit. In this way, contact damage, increased contact impedance, and damage of the first switch are avoided, and reliability of the entire photovoltaic energy storage system is improved.

With reference to the third aspect, in some implementations of the third aspect, the first switch includes any one of the following: a relay, a metal-oxide semiconductor field-effect transistor MOSFIT, and an insulated gate bipolar transistor IGBT.

With reference to the third aspect, in some implementations of the third aspect, the switching transistor includes any one of the following: a metal-oxide semiconductor field-effect transistor MOSFIT and an insulated gate bipolar transistor IGBT.

### BRIEF DESCRIPTION OF DRAWINGS

FIG. 1 is a diagram of an application scenario of a photovoltaic energy storage system 100 according to an embodiment of this application;
FIG. 2 is a diagram of a structure of a photovoltaic energy storage system 100 according to another embodiment of this application;
FIG. 3 is a diagram of a structure of a photovoltaic energy storage system 100 according to another embodiment of this application;
FIG. 4(a) to FIG. 4(c) are diagrams of structures of a photovoltaic energy storage system 100 according to another embodiment of this application;
FIG. 5 is a schematic of a structure of a direct current conversion circuit 121 according to an embodiment of this application;
FIG. 6(a) and FIG. 6(b) are diagrams of current paths of a direct current conversion circuit 121 in which a switching transistor Q1 is in an open-loop PWM modulation mode according to an embodiment of this application;
FIG. 7 is a diagram of a voltage value at two ends of a first switch S1 changing with time when a switching transistor Q1 is in an open-loop PWM modulation mode;
FIG. 8 is a schematic flowchart of a control method 800 according to an embodiment of this application;
FIG. 9 is a schematic flowchart of a control method 800 according to another embodiment of this application; and
FIG. 10 is a schematic flowchart of a control method 800 according to another embodiment of this application.

### DESCRIPTION OF EMBODIMENTS

The following describes technical solutions of this application with reference to the accompanying drawings.

In descriptions of embodiments of this application, "/" means "or" unless otherwise specified. For example, A/B may represent A or B. The term "and/or" in this specification describes only an association relationship between associated objects and represents that three relationships may exist. For example, A and/or B may represent the following three cases: Only A exists, both A and B exist, and only B exists.

In embodiments of this application, prefixes such as "first" and "second" are used only to distinguish different described objects, and do not limit a location, a sequence, a priority, a quantity, or content of described objects. In embodiments of this application, use of a prefix word, for example, an ordinal number, used to distinguish between described objects does not constitute a limitation on the described objects. For descriptions of the described objects, refer to the descriptions of the context in the claims or embodiments. The use of such a prefix word should not constitute a redundant limitation. In addition, in the descriptions of embodiments, unless otherwise specified, "a plurality of" means two or more.

Reference to "in some embodiments" or the like described in this specification means that one or more embodiments of this application include a particular feature, structure, or characteristic described with reference to embodiments. Therefore, statements such as "in some embodiments" that appear at different places in this specification do not necessarily refer to a same embodiment, but mean "one or more but not all embodiments", unless otherwise specifically emphasized in another manner. The terms "include", "have", and their variants all mean "include but are not limited to", unless otherwise specifically emphasized in another manner.

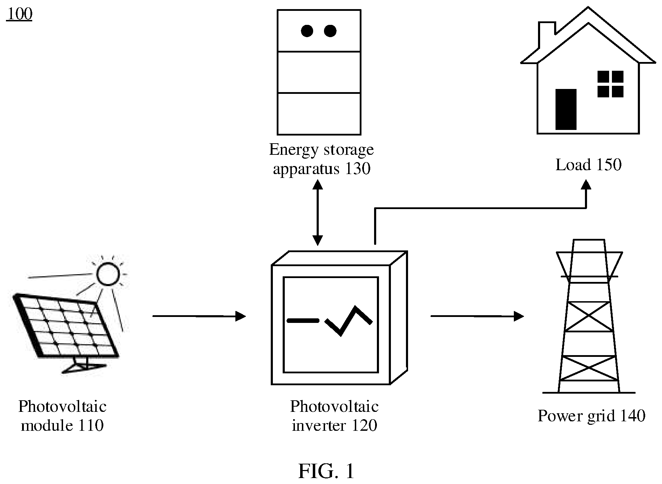

With reference to FIG. 1, the following first describes in detail an application scenario of a photovoltaic energy storage system provided in an embodiment of this application.

FIG. 1 is a diagram of an application scenario of a photovoltaic energy storage system 100 according to an embodiment of this application. As shown in FIG. 1, apparatuses in the application scenario of the photovoltaic energy storage system 100 include a photovoltaic module 110, a photovoltaic inverter 120, and an energy storage apparatus 130. Optionally, the photovoltaic energy storage system 100 may further include a power grid 140 and a load 150.

Specifically, the photovoltaic module 110 may also be referred to as a photovoltaic array, including a plurality of photovoltaic strings. Photovoltaic is also referred to as photo-voltaic, or referred to as PV for short. A string is also referred to as a string. Each photovoltaic string includes a plurality of photovoltaic panels connected in series. The photovoltaic panel is configured to convert light energy into electric energy. The electric energy generated by the photovoltaic panel is a direct current. A voltage at two ends of the photovoltaic string is equal to a sum of voltages generated by the plurality of photovoltaic panels. Output power of the photovoltaic module 110 may represent electric energy output by the photovoltaic module per unit time.

The photovoltaic inverter 120 can convert a direct current from the photovoltaic module 110 into an alternating current, and transfer the alternating current to the power grid 140 or the load 150. Alternatively, the photovoltaic inverter 120 can transfer a direct current from the photovoltaic module 110 to the energy storage apparatus 130, to charge the energy storage apparatus 130. It should be noted that a direct current is also referred to as a direct current, or referred to as a DC for short. An alternating current is also referred to as an alternating current, or referred to as an AC for short. The photovoltaic inverter 120 may also be referred to as a DC-AC converter or an inverter circuit (DC-AC).

Optionally, the photovoltaic inverter 120 may further include a voltage regulator module (not shown in the figure), and the voltage regulator module may implement a voltage regulator function for a voltage output by a power generation module. For example, the voltage regulator module may be a direct current-to-direct current converter, or may be referred to as a DC-DC converter, or may also be referred to as a direct current conversion circuit (DC-DC). In an example, the direct current conversion circuit (DC-DC) may be disposed in a maximum power point tracking (maximum power point tracking, MPPT) module in the photovoltaic inverter. It should be noted that the direct current conversion circuit (DC-DC) is usually disposed before an inverter circuit (DC-AC) in the photovoltaic inverter 120, and is configured to: regulate a direct current output by the photovoltaic module 110 and then output the direct current to the inverter circuit.

Still refer to FIG. 1. The energy storage apparatus 130 in the photovoltaic energy storage system 100 can store and release electric energy. For example, the energy storage apparatus 130 may store direct current energy from the photovoltaic module 110, and the energy storage apparatus 130 may also supply power to the power grid 140 or the load 150 by using the photovoltaic inverter 120. Therefore, the energy storage apparatus 130 is widely used in scenarios including but not limited to a household scenario, an industry green electricity scenario, a smart photovoltaic power station scenario, and the like.

It may be learned from the foregoing descriptions that the photovoltaic inverter 120 is a converter that can convert a direct current into an alternating current. Specifically, the photovoltaic inverter 120 may include two direct current ports (for example, a direct current port 1 and a direct current port 2) and an alternating current port. The two direct current ports are respectively configured to connect to the photovoltaic module 110 and the energy storage apparatus 130. For example, the direct current port 1 is configured to connect to the photovoltaic module 110, and the direct current port 2 is configured to connect to the energy storage apparatus 130. The alternating current port may be configured to output an alternating current, and the output alternating current may be distributed, for example, to the power grid 140 and the load 150, by using a power distribution box (not shown in the figure).

The photovoltaic module 110 may feed the power grid 140 and supply power to the load 150 through a direct current port. The energy storage apparatus 130 may supply power to the load 150 through a direct current port. The power grid 140 may supply power to the load 150 through an alternating current port. In other words, the photovoltaic inverter 130 is a connection hub between the load 150 and an energy module (which may include the photovoltaic module 110, the energy storage apparatus 130, and the power grid 140).

In actual application of the photovoltaic energy storage system, during daytime grid-connected power generation, a high voltage between a circuit in the photovoltaic module and a ground metal frame of the photovoltaic module causes continuous degradation of power generation performance of the photovoltaic module. This phenomenon is referred to as potential induced degradation (potential induced degradation, PID). However, due to existence of the energy storage apparatus in the photovoltaic energy storage system, at night, an inverter (or referred to as an inverter circuit) in the photovoltaic energy storage system continuously runs in a grid-connected manner under an action of the energy storage apparatus. In this case, a negative electrode (PV-) of the photovoltaic module maintains a continuous negative voltage relative to a ground (PE). Therefore, the existing photovoltaic energy storage system cannot perform PID compensation for the photovoltaic module at night.

Currently, an isolated inverter, such as a high-frequency transformer isolation solution or a power-frequency transformer isolation solution, is used in the industry, to perform PID compensation for the photovoltaic module in the photovoltaic energy storage system at night. However, the isolated inverter used in the foregoing solution has a large quantity of devices, a large size, and a higher cost. In addition, power generation efficiency of the photovoltaic system is also reduced due to existence of the transformer.

Based on this, this application is intended to provide a photovoltaic energy storage system, to perform PID compensation for a photovoltaic module at night, to resolve a PID problem of the photovoltaic module in the photovoltaic energy storage system, reduce costs, and further improve power generation efficiency of the photovoltaic energy storage system.

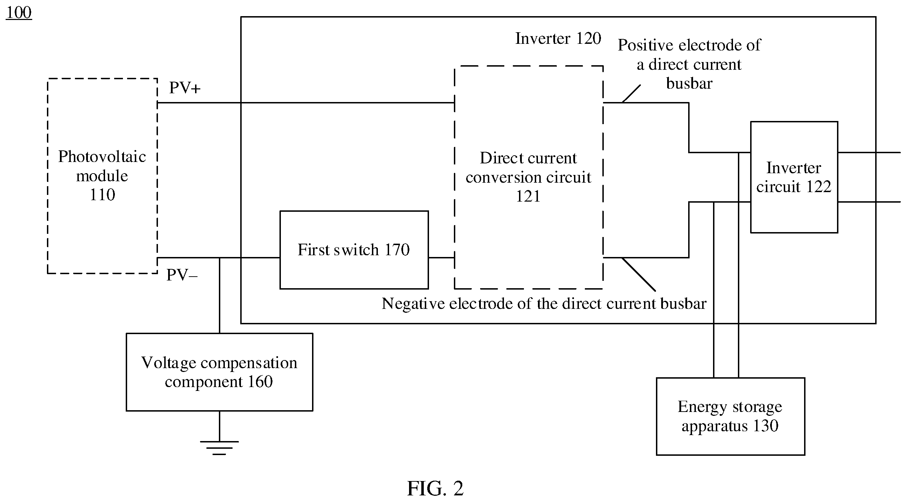

FIG. 2 is a diagram of a structure of a photovoltaic energy storage system 100 according to another embodiment of this application.

As shown in FIG. 2, the photovoltaic energy storage system 100 includes: an inverter 120, an energy storage apparatus 130, and a voltage compensation component 160. The inverter includes a direct current conversion circuit 121, an inverter circuit 122, and a direct current busbar.

Specifically, a positive input of the direct current conversion circuit 121 is configured to connect to a positive electrode of the photovoltaic module 110. A negative input of the direct current conversion circuit 121 is configured to connect to a negative electrode of the photovoltaic module 110. The photovoltaic module 110 is configured to convert light energy into direct currents. It should be noted that input ends (the positive input and the negative input) of the direct current conversion circuit 121 may be configured to connect to one or more photovoltaic modules 110. It should be understood that this is not limited in this embodiment of this application. In addition, for specific descriptions of the photovoltaic module 110, refer to the foregoing descriptions. Details are not described herein.

A positive output of the direct current conversion circuit 121 is connected to a positive electrode of the direct current busbar. A negative output of the direct current conversion circuit 121 is connected to a negative electrode of the direct current busbar. The positive electrode of the direct current busbar is connected to a positive input of the inverter circuit 122 and a positive electrode of the energy storage apparatus 130. The negative electrode of the direct current busbar is connected to a negative input of the inverter circuit 122 and a negative electrode of the energy storage apparatus 130. The direct current conversion circuit 121 is configured to perform voltage conversion on an input direct current and then output the direct current. The inverter circuit 122 is configured to convert an input direct current into an alternating current for output.

Optionally, the direct current conversion circuit 121 may be a boost (boost) circuit. For example, the direct current conversion circuit 121 may be an MPPT circuit, or may be a circuit that can implement an MPPT function. It should be understood that this is not limited in this application.

It should be noted that the direct current conversion circuit 121 is equivalent to the voltage regulator module described above, and the inverter circuit 122 is equivalent to the DC-AC converter described above. For related descriptions of the direct current conversion circuit 121, the inverter circuit 122, and the energy storage apparatus 130, refer to the foregoing descriptions. Details are not described herein.

Optionally, the energy storage apparatus 130 may include a battery module. For example, the battery module may also be referred to as a battery pack.

Optionally, the energy storage apparatus 130 may further include a direct current-direct current DC-DC conversion circuit, and the DC-DC conversion circuit is electrically connected to the battery module.

Still refer to FIG. 2. A positive electrode of the voltage compensation component 160 is configured to connect to the negative electrode (PV-) of the photovoltaic module 110. A negative electrode of the voltage compensation component 160 is connected to a ground (PE). The voltage compensation component 160 is configured to perform PID compensation for the photovoltaic module when an output voltage and/or an output current of the photovoltaic module 110 are/is less than or equal to a threshold, so that a voltage of the negative electrode of the photovoltaic module 110 relative to the ground is raised to a zero voltage or a positive voltage.

In this embodiment of this application, the photovoltaic energy storage system 100 further includes a first switch 170. The first switch 170 is disposed between a connection point between the voltage compensation component 160 and the negative input of the direct current conversion circuit 121 and the negative electrode of the direct current busbar, and is configured to control connection/disconnection between the voltage compensation component 160 and the negative electrode of the direct current busbar.

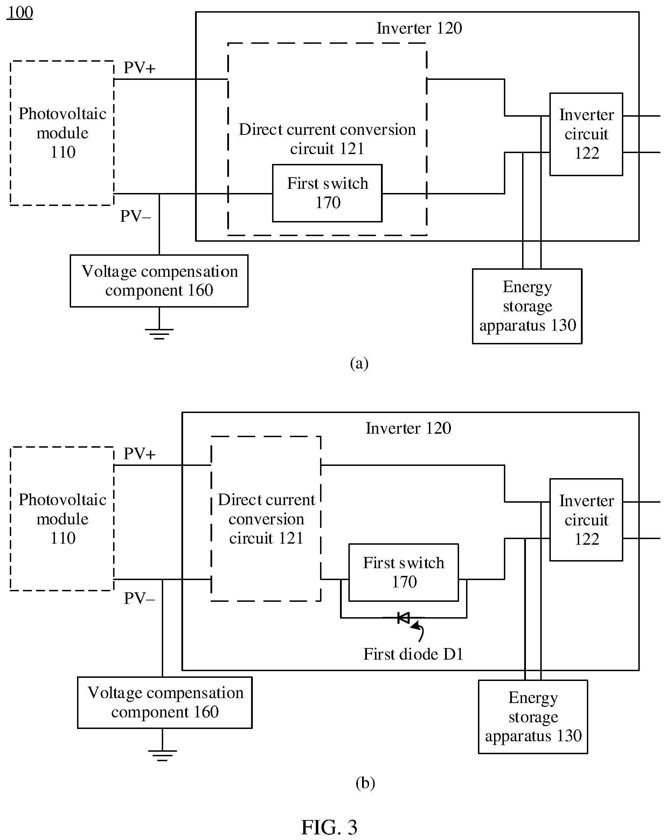

It should be noted that there may be the following several possible examples for disposing the first switch 170 between the connection point between the voltage compensation component 160 and the negative input of the direct current conversion circuit 121 and the negative electrode of the direct current busbar. Specifically, FIG. 3 is a diagram of a structure of a photovoltaic energy storage system 100 according to another embodiment of this application. As shown in FIG. 3, a position at which a first switch 170 is disposed in the photovoltaic energy storage system 100 is shown as follows.

For example, the first switch 170 may be disposed between the negative input of the direct current conversion circuit 121 and the connection point between the voltage compensation component 160 and the negative input of the direct current conversion circuit 121, as shown in FIG. 2.

For example, the first switch 170 may be disposed between the negative input of the direct current conversion circuit 121 and the negative output of the direct current conversion circuit 121, as shown in (a) in FIG. 3.

For example, the first switch 170 may be disposed between the negative output of the direct current conversion circuit 121 and the negative electrode of the direct current busbar, as shown in (b) in FIG. 3.

It should be understood that the position of the first switch 170 is merely an example for description. This is not limited in this embodiment of this application.

Further, the photovoltaic energy storage system 100 may further include a controller (not shown in the figure). The controller is configured to: when an output voltage and/or an output current of a photovoltaic module 110 are/is less than or equal to a threshold, control the first switch 170 to be turned off, and control the voltage compensation component 160 to operate, so that a voltage of a negative electrode of the photovoltaic module 110 relative to the ground is raised to a zero voltage or a positive voltage.

Specifically, that the output voltage and/or the output current of the photovoltaic module 110 are/is less than or equal to the threshold may be understood as that, at night, the photovoltaic module 110 does not convert light energy into direct currents, and the current or the voltage output by the photovoltaic module 110 is less than or equal to the threshold. Specifically, for the photovoltaic energy storage system 100, at night, an energy storage apparatus 130 provides energy for an inverter circuit 122, and the inverter circuit 122 continuously runs in a grid-connected manner. When the output voltage and/or the output current of the photovoltaic module 110 are/is less than or equal to the threshold, the controller controls the first switch 170 to be turned off, and controls the voltage compensation component 160 to operate. Controlling the voltage compensation component 160 to operate may be understood as controlling the voltage compensation component 160 to output a positive voltage, so that when the negative electrode (PV-) of the photovoltaic module 110 is disconnected from a negative input of the inverter circuit 122, the voltage compensation component 160 can output a positive voltage to the negative electrode (PV-) of the photovoltaic module 110. In this way, the voltage of the negative electrode (PV-) of the photovoltaic module 110 relative to the ground (PE) is raised to the zero voltage or the positive voltage, thereby implementing PID compensation for the photovoltaic module 110 at night.

For example, in a possible implementation, the controller is configured to: when the output voltage of the photovoltaic module 110 is less than or equal to a threshold, control the first switch 170 to be turned off. It should be understood that the threshold in this case is a voltage threshold.

For example, in a possible implementation, the controller is configured to: when the output current of the photovoltaic module 110 is less than or equal to a threshold, control the first switch 170 to be turned off. It should be understood that the threshold in this case is a current threshold.

For example, in a possible implementation, the controller is configured to: when both the output voltage and the output current of the photovoltaic module 110 are less than or equal to thresholds, control the first switch 170 to be turned off. It should be understood that the thresholds in this case are respectively a current threshold and a voltage threshold. That is, that both the output voltage and the output current are less than or equal to the thresholds may be understood as that the output voltage is less than or equal to the voltage threshold, and the output current is also less than or equal to the current threshold.

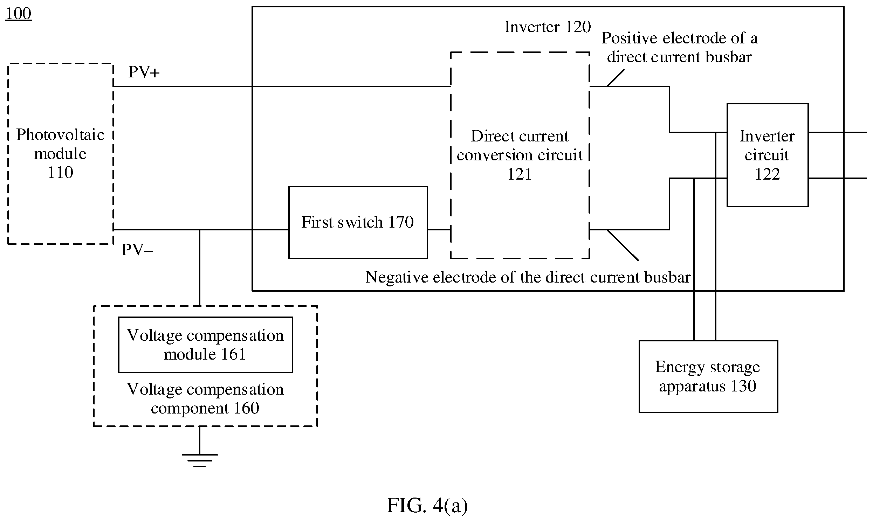

FIG. 4(a) to FIG. 4(c) are diagrams of structures of a photovoltaic energy storage system 100 according to another embodiment of this application.

Optionally, in a possible implementation, a voltage compensation component 160 is a voltage compensation module 161. Specifically, as shown in FIG. 4(a), when an output voltage and/or an output current of a photovoltaic module 110 are/is less than or equal to a threshold, a controller controls a first switch 170 to be turned off, and controls the voltage compensation module 161 to operate, so that a voltage of a negative electrode of the photovoltaic module 110 relative to a ground is raised to a zero voltage or a positive voltage.

Controlling the voltage compensation module 161 to operate may be understood as controlling the voltage compensation module 161 to output a positive voltage.

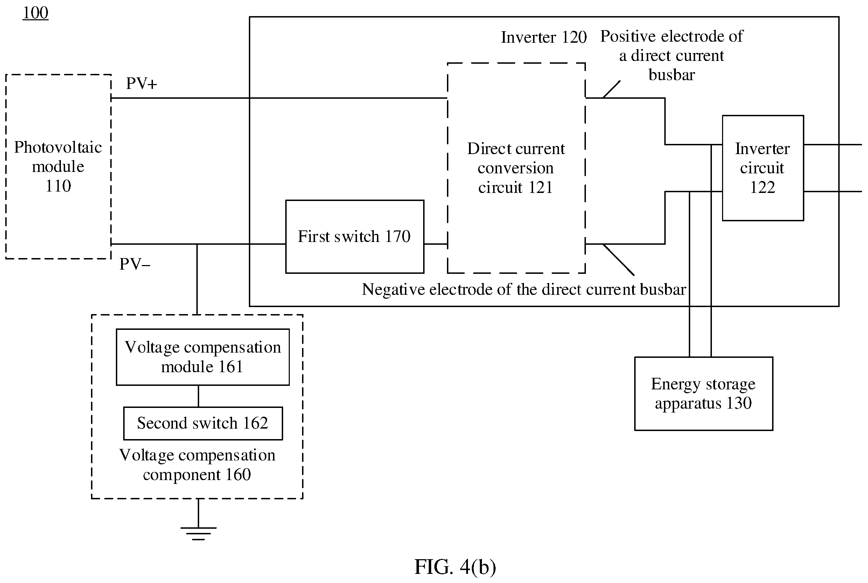

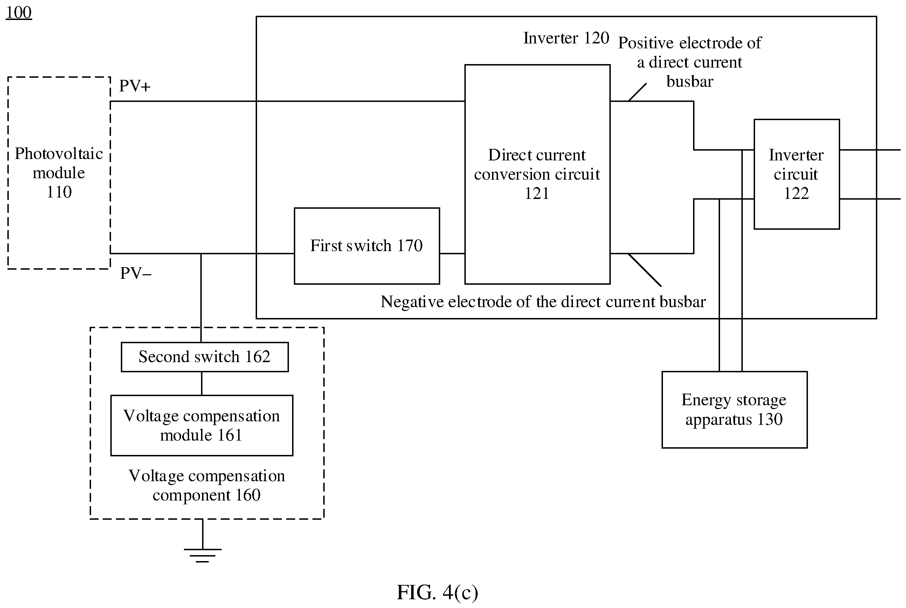

Optionally, in a possible implementation, a voltage compensation component 160 includes a voltage compensation module 161 and a second switch 162, as shown in FIG. 4(b) or FIG. 4(c). The voltage compensation module 161 is connected to the second switch 162 in series. To be specific, a positive electrode or a negative electrode of the voltage compensation module 161 is connected to the second switch 162, and the voltage compensation module 161 continuously outputs a positive voltage.

Specifically, when an output voltage and/or an output current of a photovoltaic module 110 are/is less than or equal to a threshold, a controller controls a first switch 170 to be turned off, and controls the second switch 162 to be closed, so that the voltage compensation component 160 operates, thereby raising a voltage of a negative electrode of a photovoltaic module 110 relative to the ground to a zero voltage or a positive voltage.

Controlling the voltage compensation component 160 to operate may be understood as controlling the voltage compensation component 160 to output a positive voltage.

Optionally, in another possible implementation, the controller is further configured to: when the output voltage and/or the output current of the photovoltaic module 110 are/is greater than the threshold, control the first switch 170 to be closed (turned on).

That the output voltage and/or the output current of the photovoltaic module 110 are/is greater than the threshold may be understood as that, in daytime, the photovoltaic module 110 converts solar energy into direct currents for output. In this case, the controller controls the first switch 170 to be turned on, and the photovoltaic module 110, an inverter circuit 122, and the like in the photovoltaic energy storage system 100 operate normally. In this case, the voltage compensation component 160 does not perform PID compensation for the negative electrode (PV-) of the photovoltaic module 110.

Optionally, in a possible implementation, the controller is further configured to: when the output voltage and/or the output current of the photovoltaic module 110 are/is greater than the threshold, control the first switch 170 to be closed (turned on), and control the voltage compensation component 160 to stop operating.

It should be noted that, that the voltage compensation component 160 stops operating may be understood as that the voltage compensation component 160 stops outputting a positive voltage. Specifically, the controller may control the voltage compensation component 160 to stop operating while controlling the first switch 170 to be turned on.

For example, when the voltage compensation component 160 is the voltage compensation module 161, the first switch 170 is controlled to be turned on, and the voltage compensation module 161 is controlled to stop operating, that is, the voltage compensation module 161 does not output a positive voltage.

For example, when the voltage compensation component 160 includes the voltage compensation module 161 and the second switch 162, the first switch 170 is controlled to be turned on, and the voltage compensation component 160 is controlled to stop operating. It may be considered as controlling the second switch 162 in the voltage compensation component 160 to be turned off. To be specific, when the second switch 162 is controlled to be turned off, an electrical connection between the negative electrode (PV-) of the photovoltaic module 110 and the voltage compensation component 160 is disconnected, and the voltage compensation component 160 does not output a positive voltage, that is, the voltage compensation component 160 stops operating.

It should be further noted that in this embodiment of this application, alternatively, the voltage compensation component 160 may be manually controlled to stop operating while the controller controls the first switch 170 to be turned on. It should be understood that this is not limited in this embodiment of this application.

It should be further noted that, the controller controlling the first switch 170 to be turned on and the controller controlling the voltage compensation component 160 to stop operating are not subject to a specific execution sequence. It should be understood that the foregoing content is merely an example for description, and this is not limited in this application.

It should be noted that the first switch 170 described above may be a relay, a metal-oxide semiconductor field-effect transistor (metal-oxide semiconductor field-effect transistor, MOSFIT), or an insulated gate bipolar transistor (insulated gate bipolar transistor, IGBT). It should be understood that this is not limited in this embodiment of this application.

Optionally, in a possible implementation, the photovoltaic energy storage system 100 further includes a first diode D1. The first diode D1 is connected in parallel across two ends of the first switch 170. A direction of a forward current of the first diode D1 is opposite to a direction of a current flowing through the first switch 170 in a closed state.

Specifically, as shown in (b) in FIG. 3, the direction of the forward current of the first diode D1 is opposite to the direction of the current flowing through the first switch 170 in a closed state. It may be understood that the first diode D1 is disposed in reverse parallel across the two ends of the first switch 170. It should be understood that a function of disposing the first diode D1 is to eliminate impact of overvoltage. For example, when the photovoltaic module 110 outputs a voltage, a voltage difference between the two ends of the first switch 170 is first eliminated by using the first diode D1, and then the first switch 170 is closed.

It should be noted that a position of the first switch 170 shown in (b) in FIG. 3 is merely an example for description. Because the first diode D1 may be disposed in reverse parallel across the two ends of the first switch 170, a position of the first diode D1 is not limited to a position shown in (b) in FIG. 3. It should be understood that this is not limited in this embodiment of this application.

In conclusion, according to the foregoing technical solution, when the output voltage and/or the output current of the photovoltaic module are/is less than or equal to the threshold, the controller controls the first switch to be turned off, so that the negative electrode of the photovoltaic module is disconnected from a negative electrode of a direct current busbar. In addition, the controller controls the voltage compensation component to operate, so that the voltage of the negative electrode (PV-) of the photovoltaic module relative to the ground (PE) is raised to the zero voltage to the positive voltage, to implement PID compensation for the photovoltaic module at night. Further, in this embodiment of this application, no isolated transformer is needed, thereby greatly reducing costs, reducing a quantity and a size of devices, and further improving power generation efficiency of the photovoltaic energy storage system.

However, when an energy storage apparatus in the photovoltaic energy storage system is shut down at a lower limit (for example, a battery SoC in the energy storage apparatus reaches lower-limit shutdown, the energy storage apparatus is faulty, a battery level reaches a lower limit, or an energy storage switch is manually turned off), the photovoltaic energy storage system is powered off. To ensure that the photovoltaic energy storage system can function properly when the photovoltaic module has an output voltage or an output current in daytime, the first switch needs to be controlled to be closed before the energy storage apparatus is shut down at a lower limit.

However, the photovoltaic energy storage system continuously operates in a grid-connected manner at night, and when the first switch is controlled to be turned off, the voltage compensation component raises the voltage of the negative electrode (PV-) of the photovoltaic module relative to the ground (PE) to the zero voltage or the positive voltage, and the negative electrode (BUS-) of the direct current busbar in the photovoltaic energy storage system relative to the ground is a negative voltage. Therefore, there is a large voltage difference between the two ends of the first switch. In this case, when the controller controls the first switch to be closed, which may cause damage to a contact of the first switch and increase in contact impedance, affecting reliability of the entire photovoltaic energy storage system and even causing damage to the first switch.

To avoid the foregoing problem on the first switch, in this embodiment of this application, the controller is further configured to: when a voltage of the direct current busbar is less than or equal to a first preset value, control a PWM modulation mode of a switching transistor Q1 in a direct current conversion circuit 121 to be an open-loop PWM modulation mode. The first preset value is a preset voltage value.

It should be understood that the voltage of the direct current busbar may be considered as an input busbar voltage of an inverter circuit 122 in an inverter, or an input busbar voltage of an auxiliary source in an inverter 120. That the voltage of the direct current busbar is less than or equal to the first preset value may be understood as that the energy storage apparatus 130 in the photovoltaic energy storage system 100 is shut down at a lower limit. In this case, the energy storage apparatus 130 does not provide energy to the inverter 120.

It should be noted that, when the controller controls the switching transistor Q1 in the direct current conversion circuit 121 to be in the open-loop PWM modulation mode, a voltage at the two ends of the first switch 170 decreases.

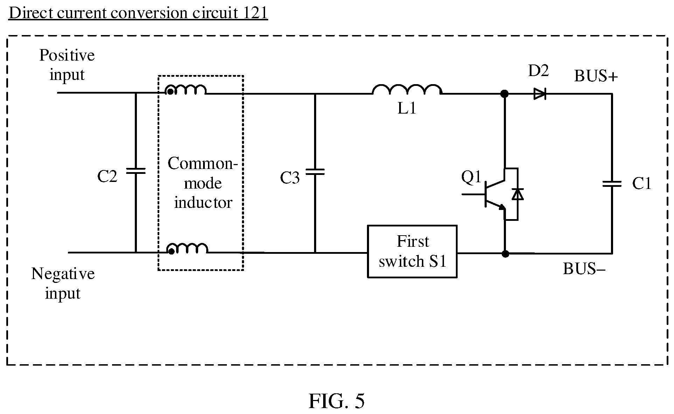

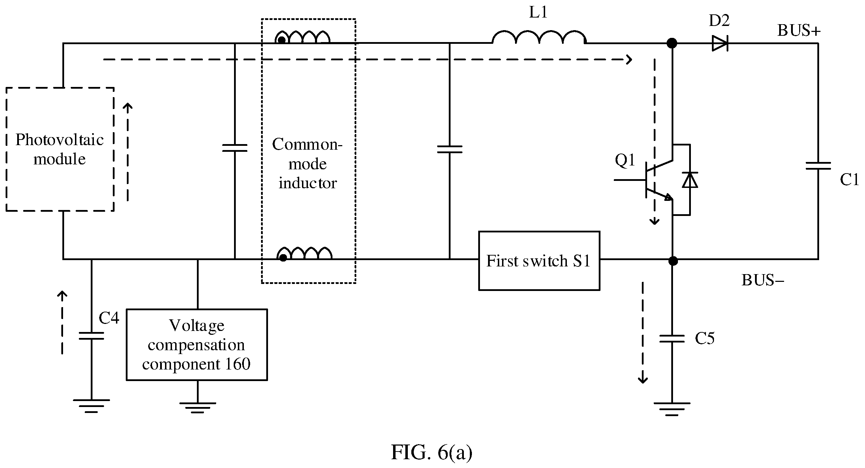

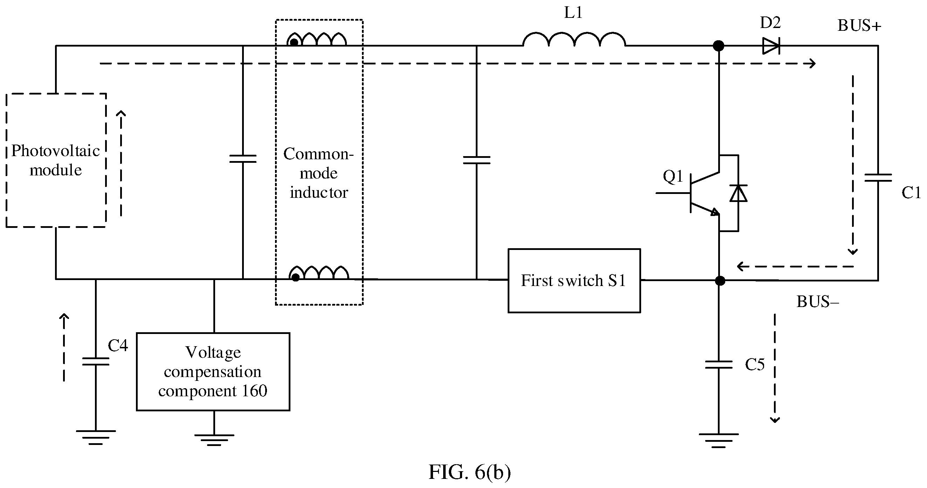

With reference to FIG. 5 and FIG. 6(a) and FIG. 6(b), the following describes in detail a structure of the direct current conversion circuit 121 and a current path of the direct current conversion circuit in which the switching transistor is in the open-loop PWM modulation mode. FIG. 5 is a schematic of a structure of a direct current conversion circuit 121 according to an embodiment of this application. FIG. 6(a) and FIG. 6(b) are diagrams of current paths of a direct current conversion circuit 121 in which a switching transistor Q1 is in an open-loop PWM modulation mode according to an embodiment of this application.

As shown in FIG. 5, the direct current conversion circuit 121 includes: a positive input, a negative input, an inductor L1, a first switch S1, a second diode D2, the switching transistor Q1, a busbar capacitor C1, a positive output (BUS+), and a negative output (BUS-). The positive input and the negative input are configured to connect to one or more photovoltaic modules (not shown in the figure). The positive output (BUS+) and the negative output (BUS-) are configured to connect to a direct current busbar. One end of the busbar capacitor C1 is connected to the positive output (BUS+), and the other end of the busbar capacitor C1 is connected to the negative output (BUS-).

It should be understood that the first switch S1 is equivalent to the first switch 170 described above. For ease of understanding, the first switch S1 is uniformly used for detailed description in the following.

It should be noted that the switching transistor Q1 may be a metal-oxide semiconductor field-effect transistor (metal-oxide semiconductor field-effect transistor, MOSFIT), or an insulated gate bipolar transistor (insulated gate bipolar transistor, IGBT). It should be understood that this is not limited in this embodiment of this application.

Specifically, one end of the inductor L1 is connected to the positive input, and the other end of the inductor L1 is connected to an anode of the second diode D2. The anode of the second diode D2 is further connected to a first end of the switching transistor Q1, and a cathode of the second diode D2 is connected to the positive output (BUS+). A second end of the switching transistor Q1 is connected to the negative output (BUS-), and is further connected to one end of the first switch S1. The other end of the first switch S1 is connected to the negative input.

Optionally, when the switching transistor Q1 is a MOS transistor, the first end is a drain, and the second end is a source. That is, the anode of the second diode D2 is further connected to the drain of the switching transistor Q1, the source of the switching transistor Q1 is connected to the negative output (BUS-), and the source of the switching transistor Q1 is further connected to one end of the first switch S1.

Optionally, when the switching transistor Q1 is an IGBT transistor, the first end is an emitter, and the second end is a collector. That is, the anode of the second diode D2 is further connected to the emitter of the switching transistor Q1, the collector of the switching transistor Q1 is connected to the negative output (BUS-), and the collector of the switching transistor Q1 is further connected to one end of the first switch S1.

Optionally, the direct current conversion circuit 121 may further include a filter capacitor C2. One end of the filter capacitor C2 is connected to the positive input, and the other end of the filter capacitor C2 is connected to the negative input.

Optionally, the direct current conversion circuit 121 may further include a common-mode inductor. Input ports (the positive input and the negative input) of the direct current conversion circuit 121 are connected to input ports of the common-mode inductor. Output ports of the common-mode inductor are connected to output ports (the positive output and the negative output) of the direct current conversion circuit 121. The common-mode inductor is configured to filter common-mode noise in an alternating current.

Optionally, the direct current conversion circuit 121 may further include a filter capacitor C3. One end of the filter capacitor C3 is connected to the positive input, and the other end of the filter capacitor C3 is connected to the negative input.

It should be noted that the specific structure of the direct current conversion circuit 121 shown in FIG. 5 is merely an example for description. It should be understood that this is not limited in this embodiment of this application. For example, a position of the first switch S1 is not limited to a position shown in FIG. 5.

Further, when a controller controls the switching transistor Q1 to be in the open-loop PWM modulation mode, current paths in the direct current conversion circuit 121 are shown in FIG. 6(a) and FIG. 6(b).

Refer to FIG. 6(a). When the switching transistor Q1 is turned on, a current flows from a Y capacitor C4 through a photovoltaic module (or an equivalent diode in the photovoltaic module), the inductor L1, the switching transistor Q1, and a Y capacitor C5, and finally flows to an enclosure to form a loop. In this case, energy on a Y capacitor C1 and the Y capacitor C5 is transferred to the inductor L1 through the current flow shown in FIG. 6(a).

However, when the switching transistor Q1 is turned off, a current on the inductor L1 is freewheeled, a current path is shown in FIG. 6(b), the second diode D2 is turned on, and the current flows through the busbar capacitor C1.

In this way, as the switching transistor Q1 is continuously turned on and off in the open-loop PWM modulation mode, energy on a Y capacitor C4 and the Y capacitor C5 can be released, so that a voltage at two ends of the first switch S1 continuously decreases.

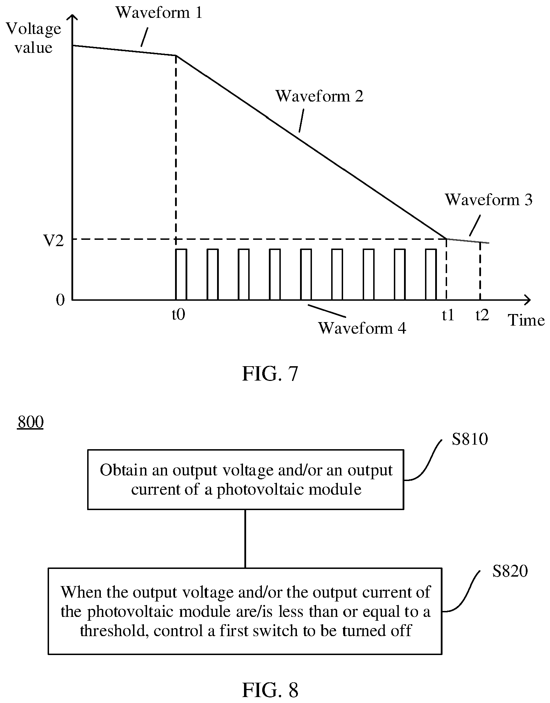

FIG. 7 is a diagram of a voltage value at two ends of a first switch S1 changing with time (or duration) when a switching transistor Q1 is in an open-loop PWM modulation mode. First, it should be noted that a waveform shown in FIG. 7 specifically includes voltage change waveforms (for example, a waveform 1, a waveform 2, and a waveform 3) at the two ends of the first switch S1 and a drive waveform (for example, a waveform 4) of the switching transistor Q1 in the open-loop PWM modulation mode.

It can be seen from FIG. 7 that, when the switching transistor Q1 is not in the open-loop PWM modulation mode, that is, before a moment t0, the controller does not control the switching transistor Q1 to be in the open-loop PWM modulation mode. It can be seen that a voltage at the two ends of the first switch S1 decreases slowly (the waveform 1). When the switching transistor Q1 is in the open-loop PWM modulation mode, that is, after the moment t0, the controller controls the switching transistor Q1 to be in the open-loop PWM modulation mode. It can be learned that, in the open-loop PWM modulation mode, the voltage at the two ends of the first switch S1 decreases quickly (the waveform 2) by continuously turning on and off the switching transistor Q1.

For example, it can be learned that the voltage at the two ends of the first switch decreases as duration (or time) for which the switching transistor is in the open-loop PWM modulation mode increases. A relationship between the voltage and the duration satisfies a linear function. In other words, a voltage value at the two ends of the first switch varies, based on a linear function, with the duration for which the switching transistor is in the open-loop PWM modulation mode, and the linear function is monotonically decreasing.

Optionally, in this embodiment of this application, the controller is further configured to: when the voltage value at the two ends of the first switch S1 is less than or equal to a second preset value, control the first switch S1 to be turned on. The second preset value is a safe turn-off voltage value at the two ends of the first switch S1, which may be understood as a critical voltage value at which the first switch S1 can be safely turned on. In other words, when the voltage at the two ends of the first switch S1 is less than or equal to the second preset value, problems such as contact damage, increase in contact impedance, and damage to the first switch S1 do not occur during turn-on of the first switch S1.

It should be noted that the second preset value is a preset threshold.

For example, as shown in FIG. 7, an example in which the second preset value is a voltage value V2 is used for description.

Optionally, in a possible implementation, when the voltage value at the two ends of the first switch S1 is less than or equal to the voltage value V2, the controller controls the first switch S1 to be turned on.

Conversely, when the voltage value at the two ends of the first switch S1 is greater than the voltage value V2, the controller controls the first switch S1 to remain turned off. When a detection apparatus detects that the voltage value at the two ends of the first switch S1 is less than or equal to the voltage value V2, the controller controls the first switch S1 to be turned on.

Optionally, in a possible implementation, the controller is further configured to: when the duration for which the switching transistor is in the open-loop PWM modulation mode is greater than or equal to preset duration, control the first switch S1 to be turned on.

It should be understood that the preset duration is duration, during which the switching transistor is in the open-loop PWM modulation mode, required for the voltage at the two ends of the first switch S1 to decrease to the second preset value. It should be understood that for a description of the second preset value, refer to the foregoing description. Details are not described herein.

Specifically, the controller starts timing when the switching transistor Q1 is in the open-loop PWM modulation mode. For example, as shown in FIG. 7, a moment at which the switching transistor Q1 starts to be in the open-loop PWM modulation mode is the moment t0. In this case, the controller starts timing. When the duration for which the switching transistor Q1 is in the open-loop PWM modulation mode is greater than or equal to the preset duration, the first switch S1 is controlled to be turned on.

As shown in FIG. 7, for example, the second preset value is the voltage value V2. It can be seen from the figure that a critical moment corresponding to the voltage value V2 is a moment t1, that is, a corresponding moment at which the voltage at the two ends of the first switch S1 decreases to V2 is the moment t1. In this case, it is assumed that the preset duration is a time period (t1 to t0).

For example, in a possible implementation, the controller starts timing when the switching transistor Q1 starts to be in the open-loop PWM modulation mode. Then, when the duration for which the switching transistor Q1 is in the open-loop PWM modulation mode is equal to the preset duration, the controller controls the first switch S1 to be turned on. For example, when the timing reaches the preset duration (for example, the time period (t1 to t0)), the controller may control the first switch S1 to be turned on.

For example, in a possible implementation, the controller starts timing when the switching transistor Q1 starts to be in the open-loop PWM modulation mode. Then, when the duration for which the switching transistor Q1 is in the open-loop PWM modulation mode is greater than the preset duration, the controller controls the first switch S1 to be turned on. In other words, at any moment after the timing reaches the preset duration (for example, the time period (t1 to t0)), the controller may control the first switch S1 to be turned on. For example, as shown in FIG. 7, the controller may control, at a moment t2, the first switch S1 to be turned on. A time period (t2 to t0) is greater than the time period (t1 to t0).

It should be noted that the open-loop PWM modulation mode described above is merely an example for description. This application may also be applicable to another PWM modulation mode, for example, provided that the voltage at the two ends of the first switch can be reduced to a specific threshold (for example, the second preset value) when the switching transistor Q1 is in the PWM modulation mode.

According to the foregoing technical solution, when the energy storage apparatus in the photovoltaic energy storage system is shut down at the lower limit (for example, the battery SoC in the energy storage apparatus reaches lower-limit shutdown, the energy storage apparatus is faulty, the battery level reaches the lower limit, or the energy storage switch is manually turned off), the first switch S1 can be safely turned on before the photovoltaic energy storage system is shut down at the lower limit. In this way, contact damage, increased contact impedance, and damage of the first switch S1 are avoided, and reliability of the entire photovoltaic energy storage system is improved.

FIG. 8 is a schematic flowchart of a control method 800 according to an embodiment of this application. As shown in FIG. 8, the control method 800 specifically includes step S810 and step S820. The following describes step S810 and step S820 in detail. It should be noted that the control method may be applied to the foregoing photovoltaic energy storage system, or may be applied to another photovoltaic power generation scenario. It should be understood that this is not limited in this embodiment of this application.

It should be noted in advance that the following related steps in this embodiment of this application may be performed by a photovoltaic energy storage system, or corresponding steps may be specifically performed by a controller.

S810: Obtain an output voltage and/or an output current of a photovoltaic module.

S820: When the output voltage and/or the output current of the photovoltaic module are/is less than or equal to a threshold, control a first switch to be turned off, and control a voltage compensation component to operate, so that a voltage of a negative electrode of the photovoltaic module relative to a ground is raised to a zero voltage or a positive voltage.

Specifically, that the output voltage and/or the output current of the photovoltaic module are/is less than or equal to the threshold may be understood as that, at night, the photovoltaic module does not convert light energy into direct currents, and the current or the voltage output by the photovoltaic module is less than or equal to the threshold. Specifically, for the photovoltaic energy storage system, at night, an energy storage apparatus provides energy for an inverter circuit, and the inverter circuit continuously runs in a grid-connected manner. When the output voltage and/or the output current of the photovoltaic module are/is less than or equal to the threshold, the controller controls the first switch to be turned off, and controls the voltage compensation component to operate.

Controlling the voltage compensation component to operate may be understood as controlling the voltage compensation component 160 to output a positive voltage, so that when the negative electrode (PV-) of the photovoltaic module is disconnected from a negative input of the inverter circuit, the voltage compensation component can output a positive voltage to the negative electrode (PV-) of the photovoltaic module. In this way, the voltage of the negative electrode (PV-) of the photovoltaic module relative to the ground (PE) is raised to the zero voltage or the positive voltage, thereby implementing PID compensation for the photovoltaic module at night.

For example, in a possible implementation, the controller obtains the output voltage of the photovoltaic module. When the output voltage of the photovoltaic module is less than or equal to a threshold, the controller controls the first switch to be turned off. It should be understood that the threshold in this case is a voltage threshold.

For example, in a possible implementation, the controller obtains the output current of the photovoltaic module. When the output current of the photovoltaic module is less than or equal to a threshold, the controller controls the first switch to be turned off. It should be understood that the threshold in this case is a current threshold.

For example, in a possible implementation, the controller obtains the output current and the output voltage of the photovoltaic module, and when both the output voltage and the output current of the photovoltaic module are less than or equal to thresholds, the controller controls the first switch to be turned off.

It should be understood that the thresholds in this case are respectively a current threshold and a voltage threshold. That is, that both the output voltage and the output current are less than or equal to the thresholds may be understood as that the output voltage is less than or equal to the voltage threshold, and the output current is also less than or equal to the current threshold.

Optionally, in a possible implementation, the voltage compensation component is a voltage compensation module. Specifically, as shown in FIG. 4(a), when the output voltage and/or the output current of the photovoltaic module are/is less than or equal to the threshold, the controller controls the first switch to be turned off, and controls the voltage compensation module to operate, so that the voltage of the negative electrode of the photovoltaic module relative to the ground is raised to the zero voltage or the positive voltage.

Controlling the voltage compensation module to operate may be understood as controlling the voltage compensation module to output a positive voltage.

Optionally, in a possible implementation, the voltage compensation component includes a voltage compensation module and a second switch, as shown in FIG. 4(b). The voltage compensation module is connected to the second switch in series. To be specific, a positive electrode of the voltage compensation module is connected to the second switch, and the voltage compensation module continuously outputs a positive voltage.

Specifically, when the output voltage and/or the output current of the photovoltaic module are/is less than or equal to the threshold, the controller controls the first switch to be turned off, and controls the second switch to be closed, so that the voltage compensation component operates, thereby raising the voltage of the negative electrode of the photovoltaic module relative to the ground to the zero voltage or the positive voltage.

Controlling the voltage compensation component to operate may be understood as controlling the voltage compensation component to output a positive voltage.

Optionally, in another possible implementation, when the output voltage and/or the output current of the photovoltaic module are/is greater than the threshold, the controller controls the first switch to be turned on.

That the output voltage and/or the output current of the photovoltaic module are/is greater than the threshold may be understood as that, in daytime, the photovoltaic module converts solar energy into direct currents for output. In this case, the controller controls the first switch to be turned on, and the photovoltaic module, the inverter circuit, and the like in the photovoltaic energy storage system operate normally. In this case, the voltage compensation component does not perform PID compensation for the negative electrode (PV-) of the photovoltaic module.

It should be noted that, that the voltage compensation component stops operating may be understood as that the voltage compensation component stops outputting a positive voltage. Specifically, the controller may control the voltage compensation component to stop operating while controlling the first switch to be turned on.

For example, when the voltage compensation component is the voltage compensation module, the first switch is controlled to be turned on, and the voltage compensation module is controlled to stop operating, that is, the voltage compensation module does not output a positive voltage.

For example, when the voltage compensation component includes the voltage compensation module and the second switch, the first switch is controlled to be turned on, and the voltage compensation component is controlled to stop operating. It may be considered as controlling the second switch in the voltage compensation component to be turned off. To be specific, when the second switch is controlled to be turned off, an electrical connection between the negative electrode (PV-) of the photovoltaic module and the voltage compensation component is disconnected, and the voltage compensation component does not output a positive voltage, that is, the voltage compensation component stops operating.

It should be further noted that the controller controlling the first switch to be turned on and the controller controlling the voltage compensation component to stop operating are not subject to a specific execution sequence. It should be understood that the foregoing content is merely an example for description, and this is not limited in this application.

It should be noted that the first switch described above may be a relay, a metal-oxide semiconductor field-effect transistor (metal-oxide semiconductor field-effect transistor, MOSFIT), or an insulated gate bipolar transistor (insulated gate bipolar transistor, IGBT). It should be understood that this is not limited in this embodiment of this application.

In conclusion, according to the foregoing technical solution, when the output voltage and/or the output current of the photovoltaic module are/is less than the threshold, the controller controls the first switch to be turned off, so that the negative electrode of the photovoltaic module is disconnected from a negative electrode of a direct current busbar. In addition, the controller controls the voltage compensation component to operate, so that the voltage of the negative electrode (PV-) of the photovoltaic module relative to the ground (PE) is raised to the zero voltage to the positive voltage, to implement PID compensation for the photovoltaic module at night. Further, in this embodiment of this application, no isolated transformer is needed, thereby greatly reducing costs, reducing a quantity and a size of devices, and further improving power generation efficiency of the photovoltaic energy storage system.

However, when the energy storage apparatus in the photovoltaic energy storage system is shut down at a lower limit (for example, a battery SoC in the energy storage apparatus reaches lower-limit shutdown, the energy storage apparatus is faulty, a battery level reaches a lower limit, or an energy storage switch is manually turned off), the photovoltaic energy storage system is powered off. To ensure that the photovoltaic energy storage system can function properly when the photovoltaic module has an output voltage or an output current in daytime, the first switch needs to be controlled to be closed before the energy storage apparatus is shut down at a lower limit.

However, the photovoltaic energy storage system continuously operates in a grid-connected manner at night, and when the first switch is controlled to be turned off, the voltage compensation component raises the voltage of the negative electrode (PV-) of the photovoltaic module relative to the ground (PE) to the zero voltage or the positive voltage, and the negative electrode (BUS-) of the direct current busbar in the photovoltaic energy storage system relative to the ground is a negative voltage. Therefore, there is a large voltage difference between the two ends of the first switch. In this case, when the controller controls the first switch to be closed, which may cause damage to a contact of the first switch and increase in contact impedance, affecting reliability of the entire photovoltaic energy storage system and even causing damage to the first switch.

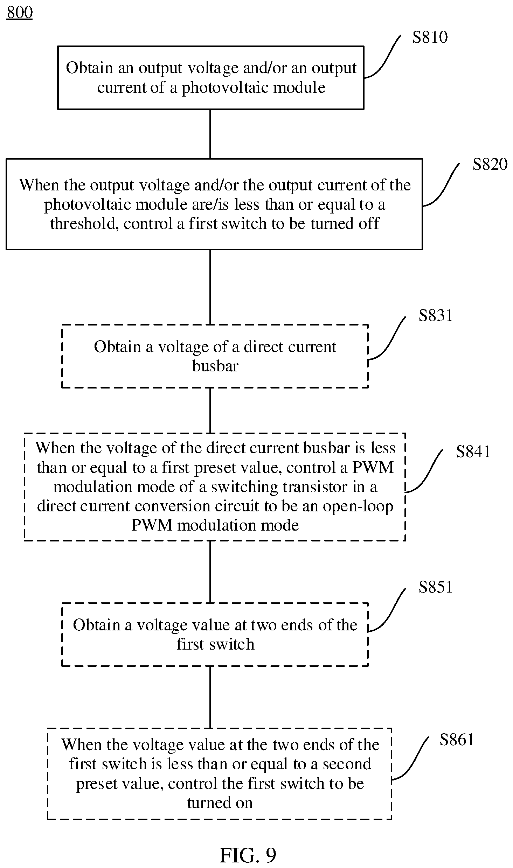

Based on this, another embodiment of this application provides a control method, to avoid the foregoing problem on the first switch. FIG. 9 is a schematic flowchart of a control method 800 according to another embodiment of this application. The method may further include the following steps.

Step S831: Obtain a voltage of the direct current busbar.

Step S841: When the voltage of the direct current busbar is less than or equal to a first preset value, control a PWM modulation mode of a switching transistor in a direct current conversion circuit to be an open-loop PWM modulation mode. The first preset value is a preset voltage value.

It should be understood that the voltage of the direct current busbar may be considered as an input busbar voltage of an inverter circuit in an inverter, or an input busbar voltage of an auxiliary source in an inverter. That the voltage of the direct current busbar is less than or equal to the first preset value may be understood as that the energy storage apparatus in the photovoltaic energy storage system is shut down at a lower limit. In this case, the energy storage apparatus does not provide energy to the inverter.

It should be noted that, when the controller controls the switching transistor in the direct current conversion circuit to be in the open-loop PWM modulation mode, a voltage at two ends of the first switch decreases.

It should be understood that, for related descriptions of the continuous decrease of the voltage at the two ends of the first switch during the open-loop PWM modulation mode of the switching transistor Q1, refer to the foregoing related descriptions in FIG. 6(a) and FIG. 6(b) and FIG. 7. For brevity, details are not described herein again.

Step S851: Obtain a voltage value at the two ends of the first switch.

Step S861: When the voltage value at the two ends of the first switch is less than or equal to a second preset value, control the first switch to be closed.

The second preset value is a safe turn-off voltage value at the two ends of the first switch, which may be understood as a critical voltage value at which the first switch can be safely turned on. In other words, when the voltage at the two ends of the first switch is less than or equal to the second preset value, problems such as contact damage, increase in contact impedance, and damage to the first switch do not occur during turn-on of the first switch.

It should be noted that the second preset value is a preset threshold.

For example, as shown in FIG. 7, an example in which the second preset value is a voltage value V2 is used for description.

Optionally, in a possible implementation, when the voltage value at the two ends of the first switch is less than or equal to the voltage value V2, the controller controls the first switch to be turned on.

Conversely, when the voltage value at the two ends of the first switch is greater than the voltage value V2, the controller controls the first switch to remain turned off. When a detection apparatus detects that the voltage value at the two ends of the first switch is less than or equal to the voltage value V2, the controller controls the first switch to be turned on.

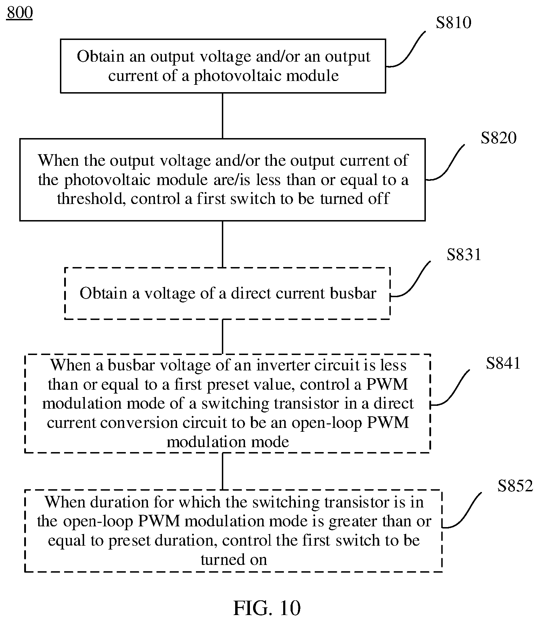

Optionally, in a possible implementation, FIG. 10 is a schematic flowchart of a control method 800 according to another embodiment of this application. As shown in FIG. 10, step S851 and step S861 may be replaced with step S852. That is, S852 is performed after step S841 is performed.

Step S852: When duration for which the switching transistor is in the open-loop PWM modulation mode is greater than or equal to preset duration, the controller controls the first switch to be turned on.

It should be understood that the preset duration is duration set in advance. It should be noted that the preset duration is duration, during which the switching transistor is in the open-loop PWM modulation mode, required for the voltage at the two ends of the first switch to decrease to the second preset value. It should be understood that for a description of the second preset value, refer to the foregoing description. Details are not described herein.

Specifically, the controller starts timing when the switching transistor Q1 is in the open-loop PWM modulation mode. For example, as shown in FIG. 7, a moment at which the switching transistor Q1 starts to be in the open-loop PWM modulation mode is the moment t0. In this case, the controller starts timing. When the duration for which the switching transistor Q1 is in the open-loop PWM modulation mode is greater than or equal to the preset duration, the first switch is controlled to be turned on.

As shown in FIG. 7, for example, the second preset value is the voltage value V2. It can be seen from FIG. 7 that a critical moment corresponding to the voltage value V2 is a moment t1, that is, a corresponding moment at which the voltage at the two ends of the first switch decreases to V2 is the moment t1. In this case, it is assumed that the preset duration is a time period (t1 to t0).

For example, in a possible implementation, the controller starts timing when the switching transistor Q1 starts to be in the open-loop PWM modulation mode. Then, when the duration for which the switching transistor Q1 is in the open-loop PWM modulation mode is equal to the preset duration, the controller controls the first switch to be turned on. For example, when the timing reaches the preset duration (for example, the time period (t1 to t0)), the controller may control the first switch to be turned on.

For example, in a possible implementation, the controller starts timing when the switching transistor Q1 starts to be in the open-loop PWM modulation mode. Then, when the duration for which the switching transistor Q1 is in the open-loop PWM modulation mode is greater than the preset duration, the controller controls the first switch to be turned on. In other words, at any moment after the timing reaches the preset duration (for example, the time period (t1 to t0)), the controller may control the first switch to be turned on. For example, as shown in FIG. 7, the controller may control, at a moment t2, the first switch to be turned on. A time period (t2 to t0) is greater than the time period (t1 to t0).

According to the foregoing technical solution, when the energy storage apparatus in the photovoltaic energy storage system is shut down at the lower limit (for example, the battery SoC in the energy storage apparatus reaches lower-limit shutdown, the energy storage apparatus is faulty, the battery level reaches the lower limit, or the energy storage switch is manually turned off), the first switch can be safely turned on before the photovoltaic energy storage system is shut down at the lower limit. In this way, contact damage, increased contact impedance, and damage of the first switch are avoided, and reliability of the entire photovoltaic energy storage system is improved.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for convenient and brief description, for a detailed operating process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the foregoing described apparatus embodiments are merely examples. For example, division of the units is merely a logical function division and may be another division during actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computing device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A photovoltaic energy storage system, comprising an inverter, an energy storage apparatus, and a voltage compensation component, wherein the inverter comprises a direct current conversion circuit, a direct current busbar, an inverter circuit, and a first switch;
a positive input of the direct current conversion circuit is configured to connect to a positive electrode of a photovoltaic module, and a negative input of the direct current conversion circuit is configured to connect to a negative electrode of the photovoltaic module;
a positive output of the direct current conversion circuit is connected to a positive electrode of the direct current busbar, a negative output of the direct current conversion circuit is connected to a negative electrode of the direct current busbar, the positive electrode of the direct current busbar is connected to a positive input of the inverter circuit and a positive electrode of the energy storage apparatus, and the negative electrode of the direct current busbar is connected to a negative input of the inverter circuit and a negative electrode of the energy storage apparatus;
a positive electrode of the voltage compensation component is configured to connect to the negative electrode of the photovoltaic module, a negative electrode of the voltage compensation component is connected to a ground, and the first switch is disposed between a connection point between the voltage compensation component and the negative input of the direct current conversion circuit and the negative electrode of the direct current busbar, and is configured to control connection/disconnection between the voltage compensation component and the negative electrode of the direct current busbar; and
the photovoltaic energy storage system further comprises a controller, wherein the controller is configured to:
when an output voltage and/or an output current of the photovoltaic module are/is less than or equal to a threshold, control the first switch to be turned off, and control the voltage compensation component to operate, so that a voltage of the negative electrode of the photovoltaic module relative to the ground is raised to a zero voltage or a positive voltage.

2. The photovoltaic energy storage system according to claim 1, wherein the voltage compensation component comprises a voltage compensation module and a second switch, the voltage compensation module is connected to the second switch in series, and the voltage compensation module outputs a positive voltage; and
the controller is specifically configured to:
control the second switch to be closed, so that the voltage compensation component operates.

3. The photovoltaic energy storage system according to claim 1 or 2, wherein the controller is further configured to:
when a voltage of the direct current busbar is less than or equal to a first preset value, control a PWM modulation mode of a switching transistor of the direct current conversion circuit to be an open-loop PWM modulation mode, wherein
when the switching transistor is in the open-loop PWM modulation mode, a voltage at two ends of the first switch decreases.

4. The photovoltaic energy storage system according to claim 3, wherein the controller is further configured to:
when a voltage value at the two ends of the first switch is less than or equal to a second preset value, control the first switch to be closed, wherein the second preset value is a safe turn-off voltage value at the two ends of the first switch.

5. The photovoltaic energy storage system according to claim 3, wherein the controller is further configured to:
when duration for which the switching transistor is in the open-loop PWM modulation mode is greater than or equal to preset duration, control the first switch to be closed.

6. The photovoltaic energy storage system according to any one of claims 1 to 5, wherein the controller is further configured to:
when the output voltage and/or the output current of the photovoltaic module are/is greater than the threshold, control the first switch to be closed, and control the voltage compensation component to stop operating.

7. The photovoltaic energy storage system according to any one of claims 3 to 5, wherein
when the switching transistor is in the open-loop PWM modulation mode, the voltage at the two ends of the first switch decreases as the duration for which the switching transistor is in the open-loop PWM modulation mode increases, wherein a relationship between the voltage and the duration satisfies a linear function.

8. The photovoltaic energy storage system according to any one of claims 1 to 7, wherein the photovoltaic energy storage system further comprises a first diode; and
the first diode is connected in parallel across the two ends of the first switch, wherein a direction of a forward current of the first diode is opposite to a direction of a current flowing through the first switch in a closed state.

9. An inverter, comprising a direct current conversion circuit, a direct current busbar, an inverter circuit, and a first switch, wherein
a positive input of the direct current conversion circuit is configured to connect to a positive electrode of a photovoltaic module, and a negative input of the direct current conversion circuit is configured to connect to a negative electrode of the photovoltaic module;
a positive output of the direct current conversion circuit is connected to a positive electrode of the direct current busbar, a negative output of the direct current conversion circuit is connected to a negative electrode of the direct current busbar, the positive electrode of the direct current busbar is connected to a positive input of the inverter circuit, the negative electrode of the direct current busbar is connected to a negative input of the inverter circuit, the positive electrode of the direct current busbar is configured to connect to a positive electrode of an energy storage apparatus, and the negative electrode of the direct current busbar is configured to connect to a negative electrode of the energy storage apparatus;
the negative input of the direct current conversion circuit is configured to connect to a positive electrode of a voltage compensation component, a negative electrode of the voltage compensation component is connected to a ground, and the first switch is disposed between the negative input of the direct current conversion circuit and the negative electrode of the direct current busbar, and is configured to control connection/disconnection between the negative input of the direct current conversion circuit and the negative electrode of the direct current busbar; and
the inverter further comprises a controller, wherein the controller is configured to:
when an output voltage and/or an output current of the photovoltaic module are/is less than or equal to a threshold, control the first switch to be turned off, and control the voltage compensation component to operate, so that a voltage of the negative electrode of the photovoltaic module relative to the ground is raised to a zero voltage or a positive voltage.

10. The inverter according to claim 9, wherein the voltage compensation component comprises a voltage compensation module and a second switch, the voltage compensation module is connected to the second switch in series, and the voltage compensation module outputs a positive voltage; and
the controller is specifically configured to:
control the second switch to be closed, so that the voltage compensation component operates.

11. The inverter according to claim 9 or 10, wherein the controller is further configured to:
when a voltage of the direct current busbar is less than or equal to a first preset value, control a PWM modulation mode of a switching transistor of the direct current conversion circuit to be an open-loop PWM modulation mode, wherein
when the switching transistor is in the open-loop PWM modulation mode, a voltage at two ends of the first switch decreases.

12. The inverter according to claim 11, wherein the controller is further configured to:
when a voltage value at the two ends of the first switch is less than or equal to a second preset value, control the first switch to be closed, wherein the second preset value is a safe turn-off voltage value at the two ends of the first switch.

13. The inverter according to claim 11, wherein the controller is further configured to:
when duration for which the switching transistor is in the open-loop PWM modulation mode is greater than or equal to preset duration, control the first switch to be closed.

14. The inverter according to any one of claims 9 to 13, wherein the controller is further configured to:
when the output voltage and/or the output current of the photovoltaic module are/is greater than the threshold, control the first switch to be closed, and control the voltage compensation component to stop operating.

15. The inverter according to any one of claims 11 to 13, wherein
when the switching transistor is in the open-loop PWM modulation mode, the voltage at the two ends of the first switch decreases as the duration for which the switching transistor is in the open-loop PWM modulation mode increases, wherein a relationship between the voltage and the duration satisfies a linear function.

16. The inverter according to any one of claims 9 to 15, wherein the inverter further comprises a first diode; and
the first diode is connected in parallel across the two ends of the first switch, wherein a direction of a forward current of the first diode is opposite to a direction of a current flowing through the first switch in a closed state.

17. A control method, wherein the method comprises:
obtaining an output voltage and/or an output current of a photovoltaic module; and
when the output voltage and/or the output current of the photovoltaic module are/is less than or equal to a threshold, controlling a first switch to be turned off, and controlling a voltage compensation component to operate, so that a voltage of a negative electrode of the photovoltaic module relative to a ground is raised to a zero voltage or a positive voltage, wherein a positive electrode of the voltage compensation component is configured to connect to the negative electrode of the photovoltaic module, and a negative electrode of the voltage compensation component is connected to the ground; and
the first switch is disposed between a connection point between the voltage compensation component and a negative input of the direct current conversion circuit and a negative electrode of a direct current busbar, and is configured to control connection/disconnection between the voltage compensation component and the negative electrode of the direct current busbar, wherein the negative electrode of the direct current busbar is connected to a negative electrode of the energy storage apparatus, and a positive electrode of the direct current busbar is connected to a positive electrode of the energy storage apparatus.

18. The control method according to claim 17, wherein the method further comprises:
obtaining a voltage of the direct current busbar; and
when the voltage of the direct current busbar is less than or equal to a first preset value, controlling a PWM modulation mode of a switching transistor of the direct current conversion circuit to be an open-loop PWM modulation mode, wherein
when the switching transistor is in the open-loop PWM modulation mode, a voltage at two ends of the first switch decreases.

19. The control method according to claim 18, wherein the method further comprises:
obtaining a voltage value at the two ends of the first switch; and
when the voltage value at the two ends of the first switch is less than or equal to a second preset value, controlling the first switch to be closed, wherein the second preset value is a safe turn-off voltage value at the two ends of the first switch.

20. The control method according to claim 18, wherein the method further comprises:
when duration for which the switching transistor is in the open-loop PWM modulation mode is greater than or equal to preset duration, controlling the first switch to be closed.

21. The control method according to any one of claims 17 to 20, wherein the method further comprises:
when the output voltage and/or the output current of the photovoltaic module are/is greater than the threshold, controlling the first switch to be closed, and controlling the voltage compensation component to stop operating.

22. The control method according to any one of claims 18 to 20, wherein that the voltage at the two ends of the first switch decreases comprises:
the voltage at the two ends of the first switch decreases as the duration for which the switching transistor is in the open-loop PWM modulation mode increases, wherein a relationship between the voltage and the duration satisfies a linear function.
